# EUROPÄISCHE PATENTSCHRIFT

(11) **EP 0 953 118 B1**
(45) Veröffentlichungstag und Bekanntmachung des Hinweises auf die Patenterteilung: **22.05.2002**
(21) Anmeldenummer: 98905270.9
(22) Anmeldetag: 07.01.1998
(51) Int. Cl.: F16B 37/04

(54) **SPANNSCHRAUBE**
CLAMPING SCREW
VIS DE SERRAGE

(30) Priorität: 16.01.1997 DE 29700737 U
(43) Veröffentlichungstag der Anmeldung: 03.11.1999
(73) Patentinhaber: HALFEN GmbH & CO. Kommanditgesellschaft, 40764 Langenfeld (DE)
(72) Erfinder: FRÖHLICH, Klaus, D-75177 Pforzheim (DE)
(74) Vertreter: Riedel, Peter, Dipl.-Ing.
(86) Internationale Anmeldenummer: EP9800047
(87) Internationale Veröffentlichungsnummer: WO9831943

(56) Entgegenhaltungen:
- FR-A- 2 062 421
- FR-A- 2 452 023
- FR-A- 2 587 067
- GB-A- 2 123 511
- US-A- 2 676 680

## Beschreibung

Die Erfindung betrifft eine Spannschraube nach dem Oberbegriff des Anspruchs 1.

Solche auf Zug und Querzug beanspruchbaren Spannschrauben werden in Montageschienen, beispielsweise in Ankerschienen für die Bautechnik eingesetzt. Sie weisen einen gewindetragenden Schraubenschaft und einen hammerförmigen Schraubenkopf auf, welcher formschlüssig in eine T-Nut des Bauteiles, zum Beispiel einer Montageschiene mit C-Profil einfügbar ist. Der Schraubenkopf ist durch einen Längsschlitz in die T-Nut einführbar und wird durch Drehung um etwa 90° in die Montagelage gebracht, in der er mit Spannabschnitten Stützschenkel der T-Nut beiderseits des Längsschlitzes untergreift. Durch Anziehen einer Mutter auf dem Schraubenschaft ist die Spannschraube an einer beliebigen Stelle in Längsrichtung der T-Nut festlegbar. Die Spannabschnitte befinden sich an den freien Enden des Schraubenkopfes. Zwischen ihnen kann an ein den Schraubenschaft tragender überhöhter Sockel vorhanden sein, an dem Ausrichtungsflächen ausgebildet sind, welche parallel zu einer den Schraubenschaft zentrisch durchdringenden Querachse des Schraubenkopfes liegen.

Die Spannabschnitte des Schraubenkopfes haben bei diesen Spannschrauben bezüglich der Anzieh-Drehrichtung vorlaufende Kanten und nachlaufende Blockierkanten. Die Blockierkanten haben einen größeren diametralen Abstand voneinander als die vorlaufenden Kanten, so daß sie zur Verhinderung eines Weiterdrehens des Schraubenkopfes über die Montagelage hinaus an einer Nutwand der T-Nut abstützbar sind. Die Blockierkanten bilden ein Widerlager gegen das Anziehmoment beim Aufsetzen der Mutter und halten dabei den Schraubenkopf in der Montagelage in der T-Nut quer zum Längsschlitz.

Die Montagelage der Spannschraube ist bei gegebener Dimensionierung der T-Nut von der Geometrie des Schraubenkopfes abhängig. Die Spannschraube und auch die Montageschiene können aus fertigungstechnischen Gründen nur mit Toleranzen der Endmaße hergestellt werden. Bei bekannten Spannschrauben kommt es aufgrund der Paßtoleranzen zu mangelhaften Ausrichtungen der Spannschrauben in der Montageschiene. Wird eine Spannschraube mit Größtmaß des Schraubenkopfes an einer schmalen Stelle der T-Nut mit Kleinstmaß verspannt, so ist der Schraubenkopf durch Anliegen der Blockierkanten vorzeitig festgelegt und nicht in die ideale Montagelage zu bringen. Im ungünstigsten Fall des Übermaßes liegt der Schraubenkopf schräg in der T-Nut, so daß er nicht die vorgesehene Drehlage in bezug auf die Montageschiene hat und die Spannabschnitte des Schraubenkopfes nur unzureichend klemmend an den Schenkeln der Montageschiene anliegen. Liegen die Maße des Schraubenkopfes an der unteren und der Montageschiene an der oberen Toleranzgrenze, so kann es beim Festziehen zu einem Durchdrehen des Schraubenkopfes in der T-Nut über die Montagelage hinaus kommen.

Die GB 2 123 551 A zeigt eine Spannschraube mit einem T-förmigen Kopf, der einen parallelogrammförmigen Grundriß aufweist. Die beiden Längsseiten des T-Kopfes sind im Bereich der spitzwinkligen Ecken mit einer Abflachung zur vereinfachten Hindurchführung durch den Schlitz der T-Nut versehen. Ferner sind am T-Kopf auf dessen dem Gewindebolzen zugewandten Seite zwei Vorsprünge vorgesehen, die im montierten Zustand im Schlitz der T-Nut liegen und einen Drehanschlag für die Spannschraube bilden. Der Drehanschlag dient dabei zur Ausrichtung des T-Kopfes längs zum Nutschlitz, in dessen Folge die Spannschraube vereinfacht demontiert werden kann. Bezüglich der Ausrichtung in Montageposition weist die gezeigte Spannschraube jedoch die oben beschriebenen Nachteile auf.

In der FR-A-2587067 ist eine Spannschraube beschrieben, deren T-förmiger Schraubenkopf einen trapezförmigen Grundriß mit zwei parallelen Lang- und zwei parallelen Kurzseiten aufweist. Der Abstand zwischen den beiden Langseiten definiert eine Kopfbreite, die etwa dem Durchmesser des Gewindeschaftes entspricht. Auch bei dieser Ausführung sind keine besonderen Vorkehrungen zu einer toleranzunempfindlichen Ausrichtung der Spannschraube in einer T-Nut vorgesehen.

Die FR-A-2062421 zeigt eine Hakenkopfschraube, deren Kopf mit einem trapezförmigen Grundriß beidseitig Haken aufweist, die entsprechend nach innen gewölbte hakenförmige Kanten einer T-Nut formschlüssig hintergreifen. Die Verbindung des trapezförmigen Grundrisses mit den Haken am Schraubenkopf erfordert eine präzise geometrische Abstimmung auf die Form der aufnehmenden Nut.

Der Erfindung liegt die Aufgabe zugrunde, die gattungsgemäße Spannschraube derart auszubilden, daß sie weitgehend lagerichtig und mit ausreichender Klemmkraft in das Bauteil, also beispielsweise in eine Montageschiene eingesetzt werden kann.

Die Aufgabe wird gemäß der Erfindung mit den Merkmalen des Anspruches 1 gelöst.

Der Schraubenkopf der Spannschraube ist demnach erfindungsgemäß derart gestaltet, daß die Blockierkante aus der Ebene einer senkrecht zu einer Querachse des Schraubenkopfes verlaufenden Seitenfläche, die Teil einer Längsseite ist, hervorsteht und daß in seiner Kontur an jeder Längsseite eine Verbindungsgerade zwischen vorlaufender Kante und Blockierkante die Querachse des Schraubenkopfes unter einem von 90° abweichenden Winkel schneidet. Der Schraubenkopf hat dadurch zwischen den Blockierkanten einen erheblich größeren Durchmesser als bei den bekannten Spannschrauben, wodurch im gesamten Paßtoleranzbereich zwischen Schraubenkopf und T-Nut nur eine vernachlässigbar geringe Abweichung von der vorgesehenen Drehlage der Spannschraube in deren Endlage auftritt. Außerdem ist der Schraubenkopf unabhängig von der jeweiligen Paßtoleranz an der Einbaustelle der Spannschraube in der T-Nut zuverlässig gegen die Stützschenkel geklemmt und in seiner Lage gesichert. Ist der Schraubenkopf punktsymmetrisch zu einer durch den Schraubenschaft verlaufenden Schraubenachse ausgebildet, so ist die Positionierung der Spannschraube in der idealen Montagelage besonders einfach.

Ausführungsbeispiele der Erfindung sind im Folgenden anhand der Zeichnung näher erläutert. Es zeigen
- Fig. 1: eine Spannschraube in perspektivischer Darstellung,
- Fig. 2: in perspektivischer Darstellung die Montagelage einer Spannschraube in einer Montageschiene mit C-Profil,
- Fig. 3a bis 3c: in Draufsicht die Spannschraube in verschiedenen, von den Maßtoleranzen abhängigen Lagen in der Montageschiene,
- Fig. 4a und 4b: schematisch zwei Stellungen einer Spannschraube üblicher Ausführung in einer Montageschiene,
- Fig. 5a und 5b: zum Vergleich mit der Spannschraube nach Fig. 4a und 4b die entsprechenden Stellungen der erfindungsgemäßen Spannschraube.

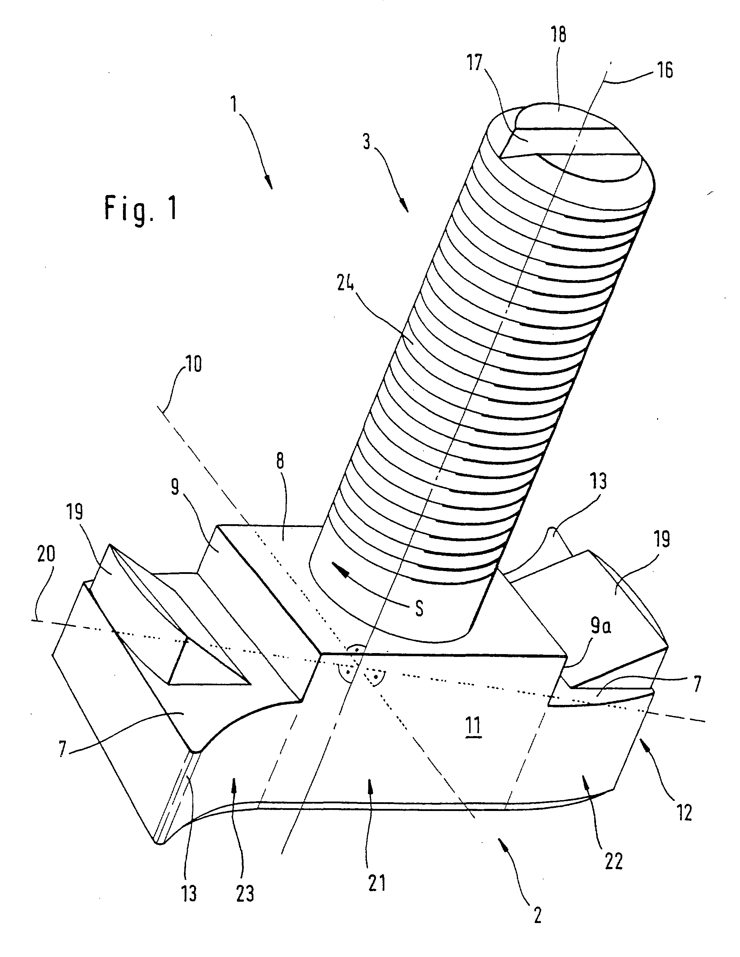

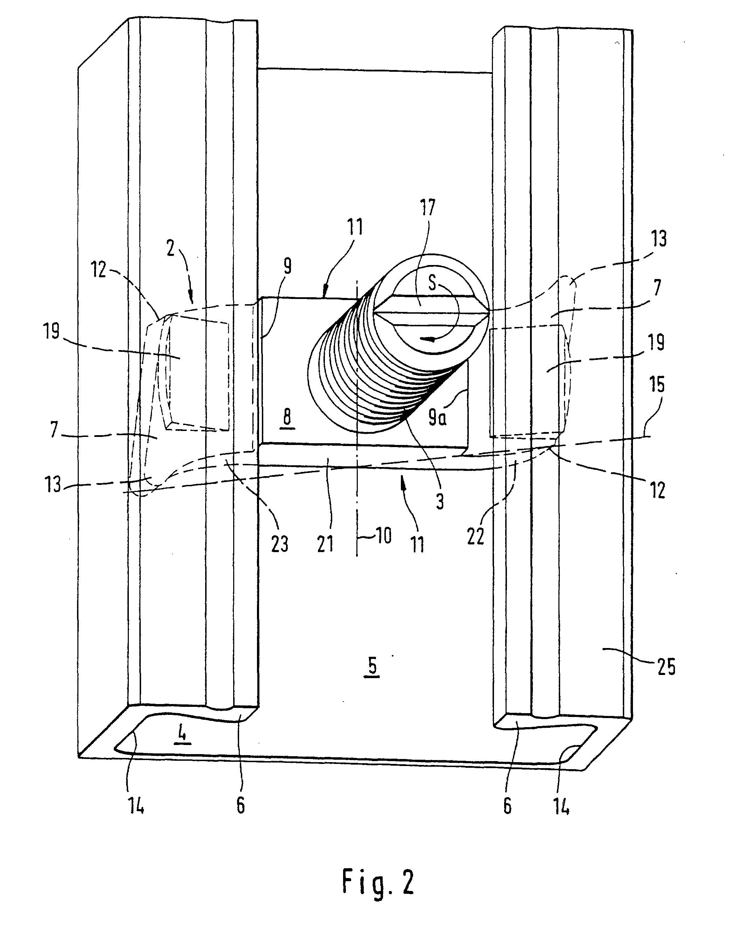

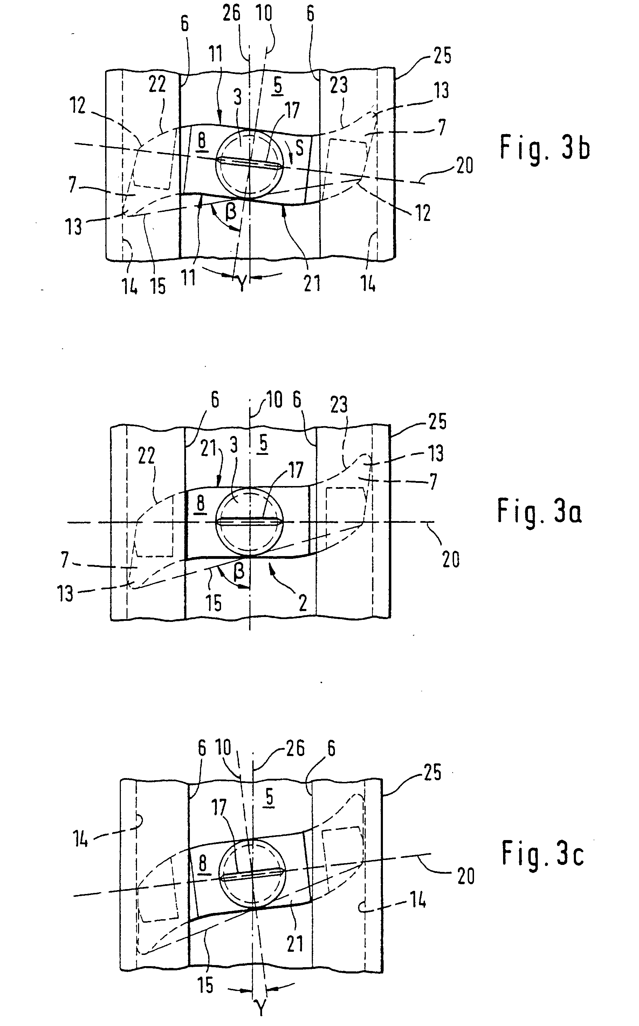

Die in Fig. 1 gezeigte Spannschraube 1 ist, wie in Fig. 2 dargestellt, in eine Montageschiene 25 mit C-Profil einzusetzen. Solche Montageschienen werden beispielsweise in eine Wand oder Decke eines Bauwerkes einbetoniert und dort verankert, wofür am Schienenrücken Anker befestigt sind (nicht dargestellt). Die in eine derartige Ankerschiene eingesetzten Spannschrauben dienen zum Befestigen von Bauteilen, die an der Wand oder Decke anzubringen sind. Die Spannschraube 1 besteht aus einem hammerförmigen Schraubenkopf 2 und einem Schraubenschaft 3 mit Gewinde 24, auf das eine (nicht dargestellte) Schraubenmutter mit Unterlegscheibe aufzusetzen ist, die den Längsschlitz 5 der Schiene übergreift. Der Schraubenschaft 3 wird getragen von einem Sockel 8, welcher Bestandteil eines Mittelabschnittes 21 ist und mit Stirnflächen 9 und 9a den Schraubenkopf 2 überragt. An den Mittelabschnitt 21 grenzen endseitige Spannabschnitte 7 des Schraubenkopfes 2 an. Die Stirnflächen 9 und 9a des Sockels 8 liegen parallel zu einer Querachse 10 des Schraubenkopfes 2 (Fig. 3) und in der optimalen Montagelage der Spannschraube 1 (Fig. 3a) parallel zur Längsachse einer T-Nut 4 der Montageschiene 25. In der Montagelage liegt der Schraubenkopf 2 quer zu dem Längsschlitz 5 der Montageschiene 25 und hintergreift mit den Spannabschnitten 7 jeweils Stützschenkel 6 der Schiene beiderseits des Längsschlitzes 5. Die Spannabschnitte 7 tragen jeweils Spannhufe 19 mit zum Sockel 8 abfallender oberer Fläche, welche dem Schraubenkopf 2 mit einer Hakenwirkung besseren Halt in der entsprechend geformten T-Nut 4 geben und für günstige Spannungsverhältnisse nach dem Aufsetzen der Mutter auf dem Schraubenschaft sorgen. Die Spannhufe 19 liegen auf einer Längsachse 20 des Schraubenkopfes 2 einander gegenüber. Die Längsachse 20 verläuft senkrecht zu der Querachse 10 und zu der Achse 16 des Schraubenschaftes 3. Im Schaftende 18 des Gewindeschaftes 3 ist als Drehwinkelmarkierung eine Markierungskerbe 17 eingebracht, welche die Längserstreckung des Schraubenkopfes 2 anzeigt und parallel zu der Längsachse 20 liegt.

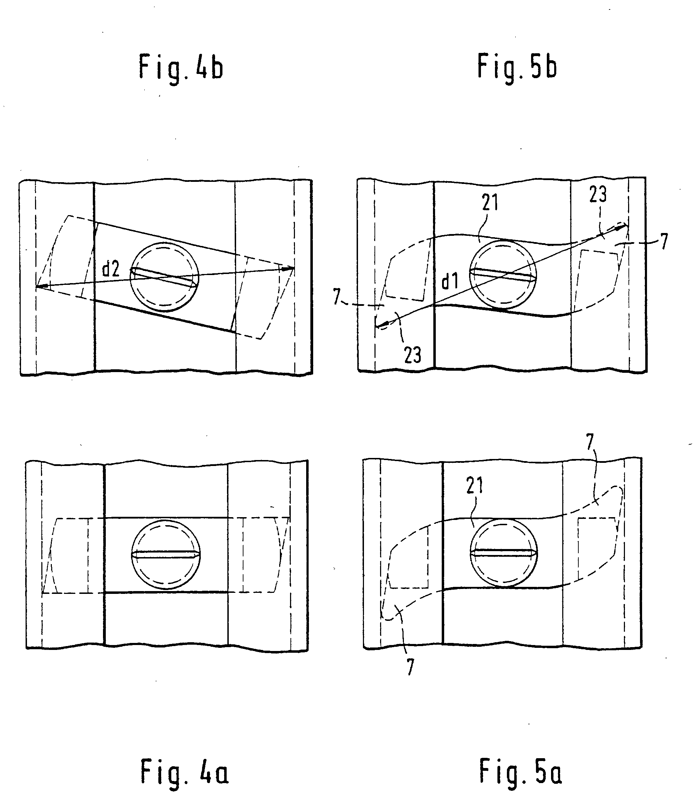

Der Schraubenkopf 2 ist punktsymmetrisch zu der Schraubenachse 16 derart ausgebildet, daß die Spannabschnitte 7 beiderseits des Mittelabschnittes 21 schräg zu dessen Längserstreckung verlaufen. Sie haben jeweils eine in Anzieh-Drehrichtung S der Spannschraube 1 vorlaufende Kante 12 und eine nachlaufende Blockierkante 13. Die Drehrichtung S entspricht dabei dem Windungssinn des Gewindes 24. Der Mittelabschnitt 21 liegt senkrecht zur Querachse 10. Benachbart zu den Spannabschnitten 7 haben die Längsseiten 11 des Schraubenkopfes 2 jeweils einen zur vorlaufenden Kante 12 konvex gewölbten Vorlaufabschnitt 22 und einen zur Blockierkante 13 konkav gewölbten Nachlaufabschnitt 23. Alternativ zu der dargestellten konkaven Wölbung kann die Längsseite 11 auch aus zwei oder mehreren ebenen Abschnitten gebildet sein, die einen Winkel zwischen sich einschließen. Durch die wellenförmige Kontur des Schraubenkopfes 2 mit einer die Querachse 10 nicht rechtwinklig schneidenden Verbindungsgeraden 15 zwischen der vorlaufenden Kante 12 und der gegenüberliegenden nachlaufenden Blockierkante 13 einer Längsseite 11 (Fig. 3a bis 3c) übersteigt die Länge der Diagonalen d1 des Schraubenkopfes 2 zwischen den Blockierkanten 13 erheblich das Maß einer Diagonalen d2 bei etwa rechteckiger Kontur des Schraubenkopfes, wie der Vergleich anhand der Fig. 4 und 5 zeigt. Bei geringem Querschnitt des Schraubenkopfes 2 und damit geringem Gewicht der Spannschraube 1 wird dadurch ein zuverlässiger Halt des Schraubenkopfes 2 in der Montagelage erreicht.

Fig. 2 zeigt die Montagelage der Spannschraube in der Montageschiene 25, die C-Profil aufweist. Diese Profilform mit dem Längsschlitz 5 in der Montageschiene bildet die durchgehende T-Nut 4 mit den Stützschenkeln 6 der Montageschiene 25 beiderseits des Längsschlitzes 5. Der Schraubenkopf 2 der Spannschraube ist durch den Längsschlitz 5 an beliebiger Stelle in die T-Nut 4 einfügbar und wird durch Drehung in Anzieh-Drehrichtung S um etwa 90° in die Montagelage gebracht. Dabei hintergreift der Schraubenkopf mit seinen endseitigen Spannabschnitten 7 die Stützschenkel 6 und liegt mit den Blockierkanten 13 an den Nutwänden 14 an. Die Spannhufe 19 sind an die entsprechend angeschrägten Stützschenkel 6 der Montageschiene 25 anlegbar. Die Spannschraube kann darum auch als Hakenkopfschraube bezeichnet werden. Beim Festziehen der aufgesetzten Mutter wird infolge dieser Form des Schraubenkopfes ein Auseinanderdrücken der Schenkel 6 am Längsschlitz 5 sicher vermieden. Die Markierungskerbe 17 des Schraubenschaftes 3 liegt in der optimalen Montagelage (Fig. 3a) senkrecht zur Längsachse 26 der Montageschiene 25 und daher quer zwischen den Stützschenkeln 6. Die Montagekerbe 17 ist auch nach Aufsetzen der Mutter auf den Schaft der Spannschraube sichtbar, so daß jederzeit die Montagelage des Schraubenkopfes 2 in der T-Nut 4 überprüfbar ist.

Der Sockel 8 des Schraubenkopfes 2 ragt mit seinen parallel zur Querachse 10 verlaufenden Stirnflächen 9 und 9a zwischen die Stützschenkel 6 der Montageschiene 25 und ist so dimensioniert, daß bei Anlage der Stirnfläche 9 an dem einen Stützschenkel 6 die andere Stirnfläche 9a Abstand von dem ihr benachbarten Stützschenkel 6 hat. Beim Einsetzen der Spannschraube in die Montageschiene 25 kann die Stirnfläche 9 an dem einen Stützschenkel 6 anliegen und dient daher als Ausrichtungsfläche 9 (Fig. 3a). Der Abstand zwischen der Stirnfläche 9a und dem anderen Stützschenkel 6 ist erforderlich, um eine durch Fertigungstoleranzen bedingte leichte Schräglage des Schraubenkopfes zu gestatten (vgl. Fig. 3b und 3c).

Die in Drehrichtung S nachlaufenden Blockierkanten 13 haben einen größeren Abstand voneinander als die beiden vorlaufenden Kanten 12 und halten daher den Schraubenkopf durch Abstützung an den Nutwänden 14 der Montageschiene 25 in der Montagelage quer zur Schienenrichtung. Die vorlaufenden Kanten 12 und die nachlaufenden Blockierkanten 13 sind abgerundet. Der Radius der Blockierkanten 13 sorgt beim Festlegen der Spannschraube in der Schiene für eine gleichmäßige Verteilung der durch das Andrücken der Blockierkanten 13 an die Nutwände 14 entstehenden Spannungen.

Eine Verbindungsgerade 15 zwischen Blockierkante 13 und vorlaufender Kante 12 einer Längsseite 11 schneidet die Querachse 10 des Schraubenkopfes unter einem spitzen Winkel β, der zwischen 60° und 85° betragen kann und im Ausführungsbeispiel etwa 70° beträgt.

Die Fig. 4a und 4b zeigen schematisch in Draufsicht die Lage einer üblichen Spannschraube in der Montageschiene bei Nennmaßen (Fig. 4a) bzw. bei einem Übermaß der Schienenbreite (Fig. 4b). Zum Vergleich ist die Lage der erfindungsgemäßen Spannschraube in den Fig. 5a und 5b in Übereinstimmung mit der Darstellung in den Fig. 3a und 3b gezeigt. Wie sich aus dem Vergleich ergibt, ist es für die erfindungsgemäße Spannschraube wesentlich, daß die Spannabschnitte 7 mit dem Mittelabschnitt 21 nicht fluchten, wie bei der Ausführung nach Fig. 4, sondern von dem Mittelabschnitt 21 aus abgebogen sind. Im Ausführungsbeispiel verlaufen die Seitenflächen der Nachlaufabschnitte 23 etwa in Richtung der Diagonalen d1, sie könnten aber auch noch stärker in bezug auf die Seitenflächen des Mittelabschnittes 21 abgebogen sein, so daß sie etwa spitzwinklig zu der Diagonalen d2 verlaufen können.

Wie die Fig. 3a, 3b und 3c zeigen, wird mit dieser Konfiguration des Schraubenkopfes 2 erreicht, daß der Mittelabschnitt 21 und die Markierungskerbe 17, die bei der Montage der Spannschraube im Schlitz 5 der Montageschiene 25 sichtbar sind, auch in den beiden Extremlagen (Fig. 3b und 3c) nur leicht schräg zur Schienenachse 26 liegen, so daß eine deutliche Orientierungshilfe für die Montage gegeben ist.

Fig. 3a zeigt die Lage für den Fall, daß die Montageschiene und der Kopf der Spannschraube genaues Nennmaß haben. Im Fall nach Fig. 3b ist die Breite des Schlitzes 5 der Schiene größer. Der daraus resultierende Verdrehwinkel γ ist sehr klein. Dabei liegen die Blockierungskanten 13 so an den Nutwänden 14 an, daß auch bei erhöhtem Kraftaufwand ein Weiterdrehen der Spannschraube in Drehrichtung S ausgeschlossen ist. Wie der Vergleich der entsprechenden Fig. 5b mit Fig. 4b zeigt, wäre demgegenüber bei der üblichen Ausführung der Spannschraube ein solches Weiterdrehen leicht möglich.

In Fig. 3c ist die Lage des eingespannten Schraubenkopfes für den Fall dargestellt, daß die Breite des Schienenschlitzes 5 Untermaß hat. Auch hierbei ist der Verdrehwinkel γ klein. Die Lage der Spannschraube ist dadurch festgelegt, daß die Stirnflächen der Spannabschnitte 7 an den Nutwänden 14 annähernd flächig anliegen.

Durch die erfindungsgemäße Ausgestaltung der Spannschraube mit in Richtung der Querachse 10 gegeneinander verschobenen Spannabschnitten, wobei die Verbindungsgerade 15 zwischen einer vorlaufenden Kante 12 und einer Blockierkante 13 die Querachse 10 nicht rechtwinklig schneidet, wird bei einer minimalen Querschnittsfläche des Schraubenkopfes ein maximaler Durchmesser zwischen den Blockierkanten 13 erreicht. Die Breite des Schraubenkopfes entspricht etwa dem Durchmesser des gewindetragenden Schraubenschaftes 3, wodurch die Querschnittsfläche des Schraubenkopfes und damit das Gewicht der Spannschraube auf ein Minimum reduziert ist.

## Patentansprüche

1. Spannschraube (1) mit einem gewindetragenden Schraubenschaft (3) und einem hammerförmigen Schraubenkopf (2), welcher für ein formschlüssiges Zusammenwirken mit einem Bauteil, insbesondere einer Ankerschiene für die Bautechnik, vorgesehen ist, wobei der Schraubenkopf (2) mit endseitigen Spannabschnitten (7) versehen ist, die jeweils mit einer in Anzieh-Drehrichtung (S) der Spannschraube (1) vorlaufenden Kante (12) und einer nachlaufenden Blockierkante (13) ausgebildet sind,
**gekennzeichnet durch** eine derartige Konfiguration des Schraubenkopfes (2), daß die Blockierkante (13) aus der Ebene einer senkrecht zu einer Querachse (10) des Schraubenkopfes (2) verlaufenden Seitenfläche, die Teil einer Längsseite (11) ist, hervorsteht, und daß eine Verbindungsgerade (15) zwischen der vorlaufenden Kante (12) und der auf derselben Längsseite (11) des Schraubenkopfes (2) befindlichen Blockierkante (13) die Querachse (10) des Schraubenkopfes (2) in einem von 90° abweichenden Winkel (β) schneidet.

2. Spannschraube nach Anspruch 1,
**dadurch gekennzeichnet, daß** der Schraubenkopf (2) punktsymmetrisch zu der durch den Schraubenschaft (3) verlaufenden Schraubenachse (16) ausgebildet ist.

3. Spannschraube nach Anspruch 1 oder 2,
**dadurch gekennzeichnet, daß** der Schraubenschaft (3) mit einer Drehwinkelmarkierung (17) versehen ist, wobei vorzugsweise die Drehwinkelmarkierung als Markierungskerbe (17) in einem freiliegenden Schaftende (18) des Schraubenschaftes (3) ausgebildet ist.

4. Spannschraube nach einem der Ansprüche 1 bis 3,
**dadurch gekennzeichnet, daß** der Schraubenkopf (2) einen Mittelabschnitt (21) aufweist, an dem die senkrecht zur Querachse (10) verlaufenden Seitenflächen ausgebildet sind, und daß je eine Seitenfläche der angrenzenden Spannabschnitte (7) winklig zu der benachbarten Seitenfläche des Mittelabschnittes liegt, vorzugsweise in Draufsicht etwa in Richtung der Diagonalen des Mittelabschnittes (21) verläuft.

5. Spannschraube nach einem der Ansprüche 1 bis 4,
**dadurch gekennzeichnet, daß** die Längsseiten (11) des Schraubenkopfes (2) einen zur vorlaufenden Kante (12) konvex gewölbten Vorlaufabschnitt (22) und einen zur Blockierkante (13) konkav gewölbten Nachlaufabschnitt (23) aufweisen.

6. Spannschraube nach Anspruch 4 oder 5,
**dadurch gekennzeichnet, daß** der Mittelabschnitt (21) relativ zu den Spannabschnitten (7) überhöht ist.

7. Spannschraube nach einem der Ansprüche 1 bis 4,
**dadurch gekennzeichnet, daß** die Längsseiten (11) des Schraubenkopfes (2) aus geradlinigen Abschnitten besteht.

8. Spannschraube nach einem der Ansprüche 1 bis 7,
**dadurch gekennzeichnet, daß** der Schraubenkopf (2) an den Spannabschnitten (7) jeweils einen Spannhuf (19) mit einer zur Querachse (10) abfallenden Oberfläche aufweist.

9. Spannschraube nach einem der Ansprüche 1 bis 7,
**dadurch gekennzeichnet, daß** mindestens einige der Kanten (12 und 13), insbesondere die nachlaufenden Blockierkanten (13), abgerundet sind.

10. Spannschraube nach einem der Ansprüche 1 bis 9,
**dadurch gekennzeichnet, daß** eine die Schraubenachse (16) schneidende und senkrecht zur Querachse (10) liegende Längsachse (20) des Schraubenkopfes (2) zwischen vorlaufender Kante (12) und nachlaufender Blockierkante (13) des jeweiligen Spannabschnittes verläuft.

11. Spannschraube nach einem der Ansprüche 1 bis 10,
**dadurch gekennzeichnet, daß** der von Querachse (10) und Verbindungsgerade (15) eingeschlossene Winkel (β) zwischen 60° und 85°, insbesondere 70°, beträgt.

12. Spannschraube nach einem der vorhergehenden Ansprüche,
**dadurch gekennzeichnet, daß** die Breite des Schraubenkopfes (2) etwa dem Nenndurchmesser des Schraubenschaftes (3) entspricht.

13. Spannschraube nach einem der Ansprüche 1 bis 12,
**dadurch gekennzeichnet, daß** der Schraubenkopf (2) einen den Schraubenschaft (3) tragenden Sockel (8) aufweist, der Ausrichtungsflächen (9) aufweist, die in der Montagelage der Spannschraube parallel zu der den Schraubenschaft (3) zentrisch durchdringenden Querachse (10) des Schraubenkopfes (2) liegen, wobei der Sockel (8) zwischen den Stützschenkeln (6) des Bauteiles (5) liegt.

## Claims

1. Clamping screw (1) with a thread-carrying screw shaft (3) and a hammer-shaped screw head (2) which is provided for shape-locking interaction with a component, in particular an anchor rail for building technology, wherein the screw head (2) is provided with end clamping sections (7) which are respectively formed with a first running edge (12) in the tightening rotation direction (S) of the clamping screw (1) and a subsequently running blocking edge (13),
**characterised by** such a configuration of the screw head (2) that the blocking edge (13) projects out of the plane of a side area running perpendicularly to a transverse axis (10) of the screw head (2) wherein this side area is part of a longitudinal side (11) and that a connecting straight line (15) between the first running edge (12) and the blocking edge (13) situated on the same longitudinal side (11) of the screw head (2) cuts the transverse axis (10) of the screw head (2) at an angle (β) deviating from 90°.

2. Clamping screw according to claim 1
**characterised in that** the screw head (2) is formed in a point-symmetrical way to the screw axis (16) running through the screw shaft (3).

3. Clamping screw according to claim 1 or 2
**characterised in that** the screw shaft (3) is provided with a rotation angle marking (17) wherein preferably the rotation angle marking is formed as a marking notch (17) in a free-lying shaft end (18) of the screw shaft (3).

4. Clamping screw according to one of the claims 1 to 3
**characterised in that** the screw head (2) has a middle section (21), on which the side areas running perpendicularly to the transverse axis (10) are formed, and that a side area of the bordering clamping sections (7) lies respectively at an angle to the neighbouring side area of the middle section, preferably in top view approximately in the direction of the diagonals of the middle section (21).

5. Clamping screw according to one of the claims 1 to 4
**characterised in that** the longitudinal sides (11) of the screw head (2) have a first running section (22) convexly arched to the first running edge (12) and a subsequently running section (23) concavely arched to the blocking edge (13).

6. Clamping screw according to claim 4 or 5
**characterised in that** the middle section (21) is superelevated relative to the clamping sections (7).

7. Clamping screw according to one of the claims 1 to 4
**characterised in that** the longitudinal sides (11) of the screw head (2) consist of straight line sections.

8. Clamping screw according to one of the claims 1 to 7
**characterised in that** the screw head (2) respectively has a clamping horse shoe (19) on each of the clamping sections (7) with an upper area falling away to the transverse axis (10).

9. Clamping screw according to one of the claims 1 to 7
**characterised in that** at least some of the edges (12 and 13), in particular the subsequently running blocking edges (13), are rounded off.

10. Clamping screw according to one of the claims 1 to 9
**characterised in that** a longitudinal axis (20) of the screw head (2) lying perpendicular to the transverse axis (10) and cutting the screw axis (16) runs between the first running edge (12) and subsequently running blocking edge (13) of the respective clamping section.

11. Clamping screw according to one of the claims 1 to 10
**characterised in that** the angle (β) enclosed by the transverse axis (10) and the connecting straight line (15) is between 60° and 85°, in particular 70°.

12. Clamping screw according to one of the preceding claims
**characterised in that** the breadth of the screw head (2) corresponds approximately to the nominal diameter of the screw shaft (3).

13. Clamping screw according to one of the claims 1 to 12
**characterised in that** the screw head (2) has a socket (8) carrying the screw shaft (3) wherein this socket (8) has alignment areas (9) which in the assembly position of the clamping screw lie parallel to the transverse axis (10) of the screw head (2) centrally penetrating the screw shaft (3) wherein the socket (8) lies between the support sides (6) of the component (5).

## Revendications

1. Vis de serrage (1) comportant une tige (3) pourvue d'un filetage et une tête de vis en forme de marteau (2), qui est prévue pour une coopération selon une liaison par formes complémentaires avec un composant, notamment un rail d'ancrage pour la technique de la construction, la tête (2) de la vis étant pourvue de tronçons d'extrémité de serrage (7), qui sont agencés respectivement avec une arête (12) qui s'étend dans le sens de rotation de serrage (S) de la vis de serrage (1), et une arête aval de blocage (13), **caractérisée par** une configuration telle de la tête de vis (2), que l'arête de blocage (13) est constituée par le plan d'une surface latérale, qui s'étend perpendiculairement à un axe transversal (10) de la tête de vis (2) et fait partie d'un côté longitudinal (11), et qu'une droite de liaison (15) s'étendant entre l'arête avant (12) et l'arête de blocage (13), qui est situé sur le même côté longitudinal (11) de la tête (2) de la vis, croise l'axe transversal (10) de la tête (2) de la vis sous un angle (β) différent de 90°.

2. Vis de serrage selon la revendication 1,
**caractérisée en ce que** la tête (2) de la vis est agencée avec une symétrie ponctuelle par rapport à l'axe (16) de la vis, qui est confondu avec la tige (3) de la vis.

3. Vis de serrage selon la revendication 1 ou 2, **caractérisée en ce que** la tige (3) de la vis comporte une marque d'angle de rotation (17), de préférence la marque d'angle de rotation étant agencée sous la forme d'une encoche de marquage (17) formée sur une extrémité libre (18) de la tige (3) de la vis.

4. Vis de serrage selon l'une des revendications 1 à 3, **caractérisé en ce que** la tête (2) de la vis possède une partie (21), sur laquelle sont formées les surfaces latérales qui s'étendent perpendiculairement à l'axe transversal (10), et qu'une surface latérale respective des tronçons de serrage contigus (7) est disposée obliquement par rapport à la surface latérale voisine du tronçon médian, de préférence, selon une vue en plan, approximativement dans la direction de la diagonale du tronçon médian (21).

5. Vis de serrage selon l'une des revendications 1 à 4, **caractérisée en ce que** les côtés longitudinaux (11) de la tête de vis (2) possèdent un tronçon avant (22) cintré avec une forme convexe en direction de l'arête avant (12) et un tronçon arrière (23) cintrée avec une forme concave en direction de l'arête de blocage (13).

6. Vis de serrage selon la revendication 4 ou 5, **caractérisée en ce que** le tronçon médian (21) est surélevé par rapport aux tronçons de serrage (7).

7. Vis de serrage selon l'une des revendications 1 à 4, **caractérisée en ce que** les côtés longitudinaux (11) de la tête (2) de la vis sont constitués par des tronçons rectilignes.

8. Vis de serrage selon l'une des revendications 1 à 7, **caractérisée en ce que** la tête (2) de la vis possède, au niveau des tronçons de serrage (7), respectivement un sabot de serrage (19) possédant une surface qui s'abaisse en direction de l'axe transversal (10).

9. Vis de serrage selon l'une des revendications 1 à 7, **caractérisée en ce qu'**au moins quelques-unes des arêtes (12 et 13), et notamment les arêtes de blocage arrière (13) sont arrondies.

10. Vis de serrage selon l'une des revendications 1 à 9, **caractérisée en ce qu'**un axe longitudinal (20) de la tête (2) de la vis, qui recoupe l'axe (16) de la vis et est perpendiculaire à l'axe transversal (10), s'étend entre l'arête avant (12) et l'arête de blocage arrière (13) du tronçon de serrage respectif.

11. Vis de serrage selon l'une des revendications 1 à 10, **caractérisée en ce que** l'angle (β) qui est formé entre l'axe transversal (10) et la droite de liaison (15) est compris entre 60° et 85° et notamment est égal à 70°.

12. Vis de serrage selon l'une des revendications précédentes, **caractérisée en ce que** la largeur de la vis de la tête (2) de la vis correspond approximativement au diamètre nominal de la tige (3) de la vis.

13. Vis de serrage selon l'une des revendications 1 à 12, **caractérisée en ce que** la tête (2) de la vis possède un socle (8), qui porte la tige (3) de la vis et possède des surfaces d'alignement (9), qui, lorsque la vis est dans la position de serrage et dans la position de montage, sont parallèles à l'axe transversal (10), qui traverse d'une manière centrée la tige (3) de la vis, de la tête (2) de la vis, le socle (8) étant situé entre les branches d'appui (6) de l'élément de construction (5).
